# EUROPÄISCHE PATENTSCHRIFT

(11) **EP 2 263 025 B1**
(45) Veröffentlichungstag und Bekanntmachung des Hinweises auf die Patenterteilung: **14.11.2012**
(21) Anmeldenummer: 09727221.5
(22) Anmeldetag: 16.03.2009
(51) Int. Cl.: F16H 57/04

(54) **ADAPTER, GETRIEBE UND ANTRIEB**
ADAPTER, TRANSMISSION AND DRIVE
ADAPTATEUR, TRANSMISSION ET MÉCANISME D'ENTRAÎNEMENT

(30) Priorität: 04.04.2008 DE 102008017643
(43) Veröffentlichungstag der Anmeldung: 22.12.2010
(73) Patentinhaber: SEW-EURODRIVE GmbH & Co. KG, 76646 Bruchsal (DE)
(72) Erfinder: BARTON, Peter, 75015 Bretten (DE); SAAR, Steffen, 67376 Harthausen (DE)
(86) Internationale Anmeldenummer: PCT/EP2009/001906
(87) Internationale Veröffentlichungsnummer: WO 2009/121474

(56) Entgegenhaltungen:
- WO-A-2007/124885
- AT-U1- 7 356
- DE-A1-102005 031 197
- DE-U1- 20 302 784
- GB-A- 739 854

## Beschreibung

Die Erfindung betrifft einen Antrieb.

Bei industriell eingesetzten Getrieben ist es bekannt, Lagerdeckel zum Schutz von Lagern, die zur Lagerung von Wellen des Getriebes vorgesehen sind, anzubringen. Die Lagerdeckel werden an einem Gehäuseteil des Getriebes schraubverbunden und abgedichtet.

Getriebe sind oft auch als Teil eines elektrischen Antriebes eingesetzt. Ein solcher umfasst dann einen Elektromotor, der über einen Adapter mit dem Getriebe verbunden ist und somit die eintreibende Welle des Getriebes antreibt. Dabei wird das Elektromotorgehäuse abtriebsseitig mit dem Adaptergehäuse schraubverbunden. Ebenso wird das Getriebegehäuse eintriebsseitig mit der vom Elektromotor abgewandten Seite des Adaptergehäuses verbunden. Die Rotorwelle des Elektromotors wird mit einer im Innern des Adapters vorgesehenen Adapterwelle verbunden, die wiederum mit der eintreibenden Welle des Getriebes direkt oder indirekt verbunden wird. Auf diese Weise ist es ermöglicht, im Adapter eine Kupplung zwischen der Rotorwelle des Elektromotors und der eintreibenden Welle des Getriebes zu realisieren. Abhängig von der Anordnung des Antriebs in der jeweiligen Anlage oder Maschine wird die Rückleitung des über die Rotorwelle ins Getriebe eingebrachten Drehmoments über das Adaptergehäuse rückgeleitet.

Aus der gattungsgemäßen GB 739 854 A ist ein Antriebsadapter bekannt, wobei am Adapter eine Lufteinlassöffnungen ausgebildet sind, so dass ein von einem im Adapter angeordneten Lüfter angetriebener Luftstrom Wärme von Kühlrippen eines Motors des Antriebs und Wärme von Kühlrippen eines Getriebes des Antriebs aufnimmt. Somit wird die Wärme des Getriebes direkt an die umgebende Luft abgeführt und es wird die Wärme des Motors ebenfalls direkt an die umgebende Luft abgeführt und

der WO 20071124885 A3 Ist ein Getriebe bekannt, wobei In eine Ausnehmung des Getriebegehäuses ein Kühler einsetzbar ist, wobei im Verbindungsbereich Wärmeleitpaste eingebracht wird. Die Wärme des Getriebes strömt dabei zum eingesetzten Kühler und über dessen Kühlrippen direkt an die Außenluft.

Der Erfindung liegt daher die Aufgabe zugrunde, eine möglichst große Antriebsleistung pro Volumen zu erreichen.

Erfindungsgemäß wird die Aufgabe bei dem Antrieb nach den in Anspruch 1 angegebenen Merkmalen gelöst.

Von Vorteil ist dabei, dass die Wärme, weiche im Lager an einer eintreibenden Welle erzeugt wird, möglichst direkt an einen Kühlkörperbereich des Adapters abgeführt wird. Da die Welle schnell drehend ist, kann die erzeugte Wärme erheblich sein. Dabei strömt die Wärme vom Getriebegehäuse über die Berührfläche zu einer entsprechenden Berührfläche des Adapters und von dort zum Kühlkörperbereich. Die Berührfläche ist vorzugsweise die Zentrierfläche oder ein Zentriermittel, wie die berührende Fläche eines Zentrierstifts oder dergleichen. Somit ist im zugehörigen das Getriebe umfassenden Antrieb eine möglichst große Antriebsleistung pro Volumen erreichbar. Außerdem ist auch der antreibende Elektromotor mit vom Adapter kühlbar.

Insbesondere bei einer eintreibenden Winkelgetriebestufe, wie Kegelgetriebestufe, ist das Adaptergehäuse bevorzugt an einem Lagerdeckel, insbesondere an einem topfförmig oder zylinderstumpfförmig aus dem Getriebegehäuse zum Adapter hin herausragenden Lagerdeckel aufgesetzt, der zumindest gehäusebildend für das Lager ist. Es ist aber auch vorteilhaft, wenn der Lagerdeckel den Außenring aufnimmt, mit diesem kraftschlüssig oder formschlüssig verbunden ist und somit anfallende Drehmomente ableitet an das weitere Gehäuse des Getriebes.

Bei einer vorteilhaften Ausgestaltung weist der Adapter als Kühlvorrichtung eine oberflächenvergrößernde Struktur auf, insbesondere wobei der Adapter einstückig mit der Kühlvorrichtung ausgebildet ist. Von Vorteil ist dabei, dass die Herstellung in großen Stückzahlen einfach ist und außerdem kein Wärmeübergang zum Kühlkörper hin im Adapter vorhanden ist.

Bei einer vorteilhaften Ausgestaltung umfasst der Adapter:
- einen ersten Adapterflansch, insbesondere Grundring, umfasst, der zur Verbindung mit dem Getriebegehäuse vorgesehen ist,
- einen zweiten Adapterflansch, insbesondere Adapteraußenring, umfasst, der zur Verbindung mit dem Elektromotorgehäuse vorgesehen ist,
- der erste und der zweite Adapterflansch über Verstrebungen verbunden sind, die als oder an denen eine Kühlvorrichtung ausgebildet sind oder ist.

Von Vorteil ist dabei, dass der erste Adapterflansch passend zu einer entsprechenden Gegenfläche am Getriebegehäuse ausbildbar ist. Insbesondere ist hierbei eine Zentrierfläche verwendbar. Auf diese Weise fungleren also Zentrlermittel zusätzlich als Wärmeabfuhrmittel. Die zum Adaptergehäuse hin abgeführte Wärme strömt vorzugsweise direkt vom ersten Adapterflansch zu den Verstrebungen mit der Kühlvorrichtung. Da die Verstrebungen mit Kühlvorrichtung mit dem ersten Adapterflansch verbunden sind, ist eine einstückige Ausführung hierzu ausführbar und somit kein weiterer Wärmeübergang notwendig. Ebenso ist der zweite Adapterflansch zu einer entsprechenden Gegenfläche am Elektromotor ausbildbar.

Bei einer vorteilhaften Ausgestaltung umfasst die Kühlvorrichtung radial sich erstreckende Fächer oder Rippen. Von Vorteil Ist dabei, dass die Wärme an möglichst vielen radial innen liegenden Bereichen aufnehmbar ist und nach radial außen abtransportierbar und somit aufspreizbar ist.

Bei einer vorteilhaften Ausgestaltung ist ein Lüfterrad mit der Welle verbunden, insbesondere Innerhalb des Adapters. Von Vorteil ist dabei, dass bei hoher Drehzahl ein starker Luftstrom erzeugbar ist, der somit zu einer großen Kühlleistung führt, wenn auch eine hohe Verlustleistung auftritt. Bei kleinen Drehzahlen ist der Luftstrom gering, jedoch ist dann auch die Verlustleistung gering. Außerdem verbessert das Lüfterrad den Gleichlauf der Welle, indem das Trägheitsmoment erhöht wird.

Bei einer vorteilhaften Ausgestaltung weist das Lüfterrad einen Grundkörper und Lüfterflügel auf, insbesondere wobei am äußeren Umfang des Lüfterrads ein Verbindungsring und/oder ein Luftleitring vorgesehen ist. Von Vorteil ist dabei, dass die Führung des Luftstromes verbessert ist und somit auch der Wirkungsgrad der Kühlanordnung.

Bei einer vorteilhaften Ausgestaltung ist das Lüfterrad formschlüssig, insbesondere mittels Passfederverbindung, mit der Welle verbunden. Von Vorteil ist dabei, dass eine leistungsfähige sichere Verbindung verwendbar ist.

Bei einer vorteilhaften Ausgestaltung ist die Welle eine eintreibende Welle des Getriebes oder eine Adapterwelle. Von Vorteil ist dabei, dass der Lüfter wegen der hohen Drehzahl, insbesondere der am Getriebe auftretenden höchsten Drehzahl, auch einen starken Luftstrom erzeugt.

Bei einer vorteilhaften Ausgestaltung ist der Lüfter gekapselt vorgesehen ist, insbesondere ein Luftumlenkblech zum Umlenken der Luft in axiale Richtung vorgesehen ist ausgebildet ist.

Bei einer vorteilhaften Ausgestaltung weist der Kühlkörper eine oberflächenvergrößernde Struktur auf, insbesondere ist er einstückig ausgebildet. Von Vorteil ist dabei, dass die Herstellung einfach ist und kein weiterer Wärmeübergang zwischen zwei Teilbereichen des Kühlkörpers herzustellen ist. Insbesondere ist die Struktur mit einer hohen Symmetrie ausstattbar, um eine isotrope Wärmeableitung zu ermöglichen. Wenn beispielsweise eine zumindest diskrete Rotationssymmetrie vorgesehen ist, ist die Wärmeableitung unabhängig von der entsprechenden Drehlage des Getriebes im Wesentlichen gleich gut ableitbar.

Bei einer vorteilhaften Ausgestaltung ist der Lüfter als Axiallüfter ausgebildet und somit der Kühlkörper in besonders effektiver Weise angeströmt.

Wichtige Merkmale bei dem Antrieb sind, dass er mit einem vorbeschriebenen Adapter ausgeführt ist. Somit ist vorteiligerweise eine schnell drehende eintreibende Welle kühlbar. Insbesondere Ist somit die Wärmeproduktion des gesamten Getriebes verringert und somit die durchleitbare Leistung pro Bauvolumen des Getriebes erhöht. Ein einen Elektromotor umfassender Antrieb weist also einen erhöhten Wirkungsgrad auf. Insbesondere ist der von einem Lager mit zugeordnetem Weilendichtring erzeugte Wärmestrom über den Kühlkörper auf kurzem Wege ableitbar an die Umgebung.

Wichtige Merkmale bei dem Antrieb sind, dass er ein von einem Elektromotor angetriebenes Getriebe umfasst das einen vorbeschriebenen Adapter aufweist. Von Vorteil ist dabei, dass insgesamt eine hohe Leistung pro Volumen des zugehörigen Antriebs erzeugbar ist.

Weitere Vorteile ergeben sich aus den Unteransprüchen.

### Bezugszeichenliste

1 Kühlrippe
2 Grundring
20 eintreibende Welle
21 Gehäuse
22 Lagerdeckel
40 abtreibende Welle
41 Adapteraußenring
42 Versteifung
43 Ausnehmung für Lufteinlass
44 Bohrung

Die Erfindung wird nun anhand von Abbildungen näher erläutert:

Bei der Erfindung ist ein Elektromotor zum Antrieben eines Getriebes mit diesem über einen Adapter verbunden. Innerhalb des zugehörigen Adaptergehäuses ist eine Kupplung vorsehbar.

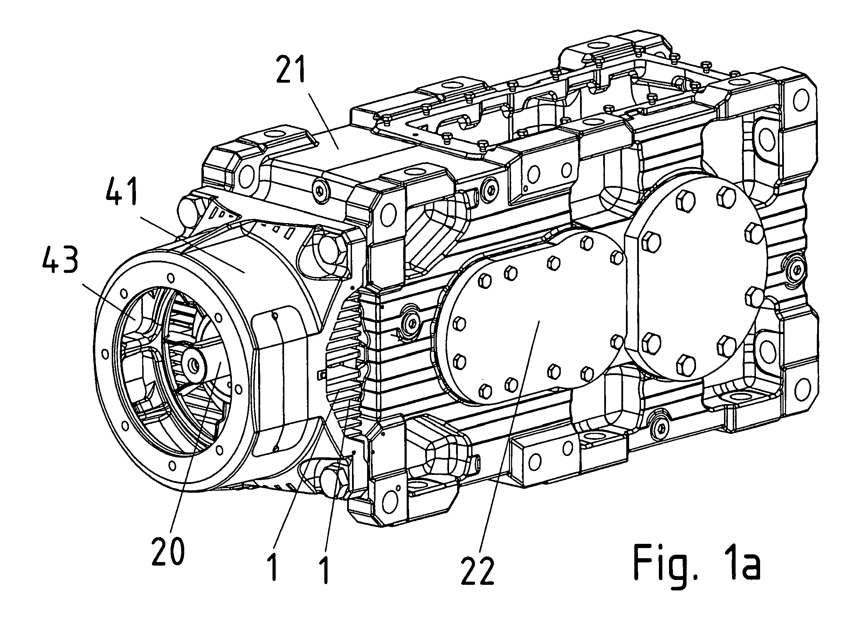

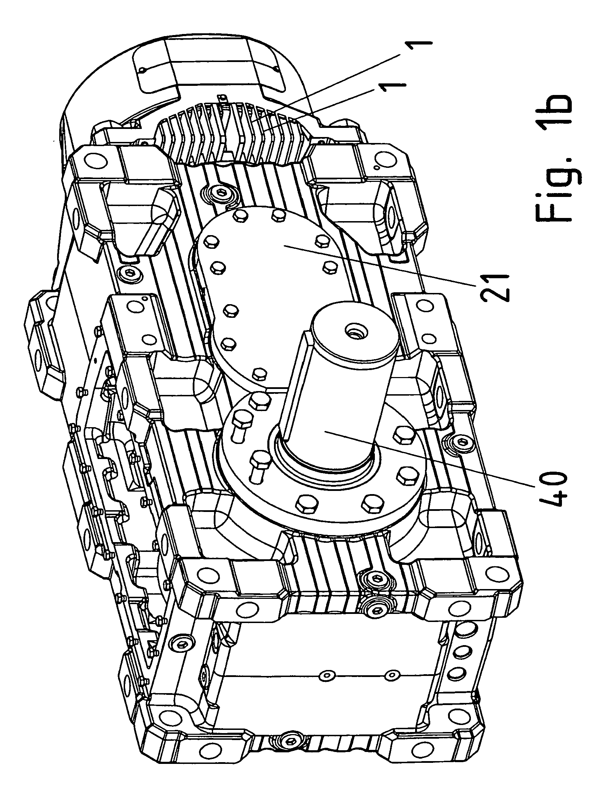

In der Figur 1 a ist eine Schrägansicht auf ein Getriebe gezeigt. Dabei ist am Getriebe das erfindungsgemäße eine Kühlvorrichtung umfassende Adaptergehäuse verbunden. Vorzugsweise ist das Adaptergehäuse mit der eintreibenden Seite des Getriebes formschlüssig, insbesondere schraubverbunden.

In Figur 1b ist eine Schrägansicht mit anderer Blickrichtung gezeigt, wobei die abtreibende Welle 40 sichtbar ist. Dabei sind Kühlrippen 1 als oberflächenvergrößernde Struktur mit einem Grundkörper 2 verbunden, welcher zur Schraub-Verbindung mit einem Lagerdeckel des Getriebes vorgesehen ist, wobei die Schrauben durch die Bohrungen 43 in entsprechende Bohrungen des Getriebes hineinragen.

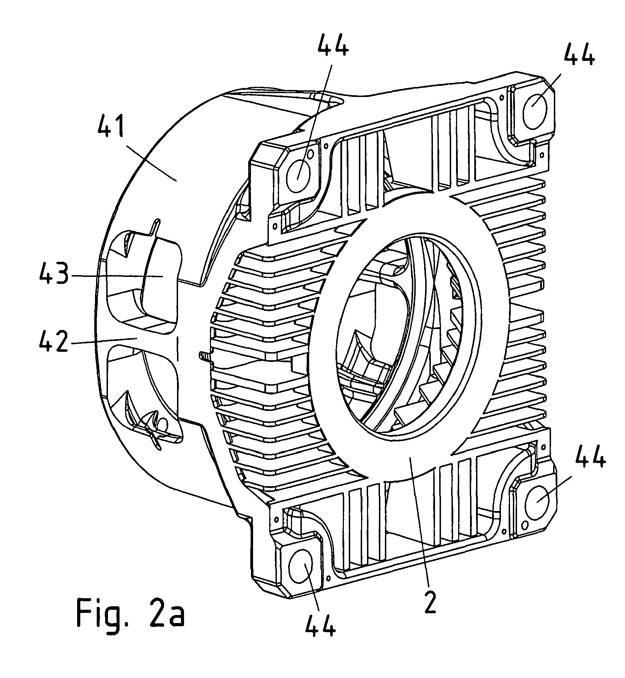

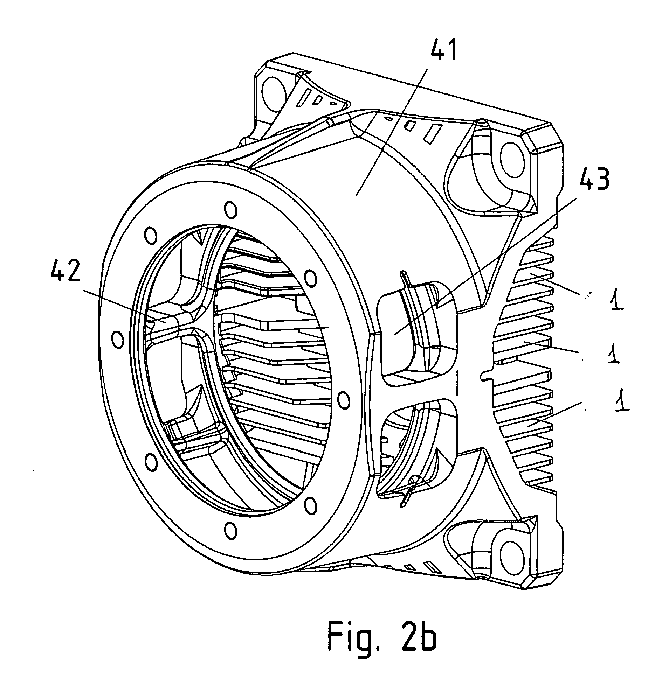

In Figur 2a ist das Adaptergehäuse in Schrägansicht gezeigt. In Figur 2b ist das Adaptergehäuse in Schrägansicht aus einer anderen Blickrichtung gezeigt. Das aus den Bohrungen 43 gebildete Bohrbild ist ein Quadrat. Die Rippen 1 sind am Grundring 2 verbunden. Vorteiligerweise ist der Adapter einstückig ausgebildet mit dem Grundring 2, den Kühlrippen, dem Adapteraußenring 41 und den Versteifungen 42. Für den Lufteinlass sind Ausnehmungen 43 zum Lufteinlass vorgesehen.

Der Grundring 2 dient zum Anflanschen des Getriebes, insbesondere obengenanntes Schraubverbinden. Der Adapteraußenring 41 dient zum Anflanschen des Elektromotors, insbesondere also Schraubverbinden mit dem getriebeseitigen Motorgehäuseflansch.

Die Rippen 1 sind zwischen Grundring 2 und Adapteraußenring 41 vorgesehen. Außerdem sind auch zwischen Grundring 2 und Adapteraußenring 41 Versteifungen 42 vorgesehen.

Das Gehäuse 21 des Getriebes ist mit de Lagerabdeckungen und Lagerdeckeln 22 schraubverbunden und dicht verbunden sind. Die eintreibende Welle 20 ist über ein Lager im Gehäuse gelagert.

Das Adaptergehäuse hat auch eine Luftleitfunktion. Denn die durch die Ausnehmungen 43 eintretende Luft wird von ihm auf die Kühlrippen 1 gelenkt. An den Kühlrippen 1 tritt die Luft vorbei in die Umgebung heraus.

Bei einem weiteren erfindungsgemäßen Ausführungsbeispiel ist auch Wärmeleitpaste in den Verbindungsbereich zwischen Adaptergehäuse, insbesondere Grundring 2, und Getriebegehäuse einbringbar und somit der Wärmeübergangswiderstand reduzierbar und die Entwärmung verbesserbar. Vorteiligerweise wird für den Wärmeübergang zumindest auch der Zentriersitz am Adapter und/oder Getriebegehäuse verwendet

Bei einem weiteren erfindungsgemäßen Ausführungsbeispiel sind am Grundkörper andere oberflächenvergrößernde Strukturen, wie Kühlrippen, Kühlfinger, Erhebungen und/oder wellenförmige Oberflächenverläufe vorgesehen.

In der Figur 1 a und 1 b ist die abtreibende Getriebestufe eine Winkelgetriebestufe. Bevorzugt ist hier eine Kegelgetriebestufe verwendet. Die eintreibende Stufe und die Zwischenstufen sind als Stirnradstufen ausgeführt.

In einem weiteren erfindungsgemäßen Ausführungsbeispiel ist zusätzlich mit der Welle 20 drehfest verbundener mitdrehender Lüfter vorgesehen. Dieser weist ebenfalls einen Grundkörper auf, an dem Lüfterflügel angebracht sind, deren äußere Enden zur Stabilisierung mit einem mitdrehenden Verbindungsring verbunden sein können. Dieser Verbindungsring leitet in geringem Umfang auch die von den Lüfterflügeln angetriebene Luft in Richtung auf den Kühlkörper. Das Adaptergehäuse dient auch zum Schutz des Lüfters. Der Lüfter ist mit der Welle verbunden und mitdrehend. Somit wird der von den Lüfterflügeln angetriebene Kühlluftstrom stärker, wenn die Drehzahl höher ist. Gleichzeitig stelgt aber mit der Drehzahl auch die Verlustwärmeerzeugung im Getriebe. Auf diese Weise ist eine sehr sparsame Weise zur Entwärmung erreicht. Das Trägheitsmoment der eintreibenden Welle wird mittels des Lüfters etwas erhöht und somit Drehzahlschwankungen entgegengewirkt. Insbesondere bei Antrieben, die einen umrichtergespeisten Elektromotor aufweisen, ist somit eine bessere Gleichlaufgüte erreichbar.

In einem weiteren erfindungsgemäßen Ausführungsbeispiel sind aber auch anders gerichtete Kühlrippen oder oberflächenvergrößernde Strukturen am Kühlkörper ausbildbar im Gegensatz zu den gleichsinnig und parallel verlaufenden Kühlrippen der Figuren 1a, 1b, 2a und 2b.

Bei weiteren erfindungsgemäßen Ausführungsbeispielen ist auch ein Luftleitring vorsehbar, der die Luftströmung besser in axiale Richtung auf den Kühlkörper hin lenkt. Somit ist eine verbesserte Effizienz der Kühlung erreicht. Vorzugsweise ist der Luftleitring mitdrehend am Lüfterrad oder an der Welle 20 befestigt. Alternativ wäre auch eine Befestigung am Adaptergehäuse ausführbar, um das Trägheitsmoment zu verringern.

Das Adaptergehäuse mit Kühlkörper ist als Blechteil oder als Gussteil ausbildbar, insbesondere aus Stahl oder aus Aluminium. In einem anderen erfindungsgemäßen Ausführungsbeispiel ist der Kühlkörper mit dem eintriebseitigen Lagerdeckel des Getriebes einstückig ausbildbar.

Vorzugsweise sind der Adapter mit Kühlkörper und der Lagerdeckel derart ausgebildet, dass der Kühlkörper in mehreren Baugrößen einer Getriebebaureihe verwendbar ist, also eine entsprechende Schnittstelle vorgesehen ist.

Die Kühlrippen fungieren auch als Berührschutz, indem sie zwischen den drehenden Teilen im Innern des Adapters und der äußeren Umgebung, insbesondere dem Bediener, angeordnet sind.

## Patentansprüche

1. Antrieb, umfassend ein von einem Elektromotor angetriebenes Getriebe, das einen zwischen Motor und Getriebe angeordneten Adapter aufweist,
wobei ein Gehäuse des Adapters an einer ersten Seite mit dem Gehäuse des Elektromotors und an einer anderen Seite mit dem Gehäuse (21) des Getriebes verbunden ist,
wobei am Adaptergehäuse eine Kühlvorrichtung ausgebildet ist und der der Adapter einstückig mit der Kühlvorrichtung ausgebildet ist,
wobei der Adapter
- einen ersten Adapterflansch umfasst, der mit dem Getriebegehäuse (21) verbunden ist,
- einen zweiten Adapferflansch umfasst, der mit dem Elektromotorgehäuse verbunden ist,
wobei der erste Adaptarflansch ein Grundring (2) und der zweite Adapterflansch ein Adapteraußenring (41) ist,
**dadurch gekennzeichnet, dass**
Kühlrippen (1) und Versteifungen (42) zwischen dem Grundring (2) und dem Adapteraußenring (41) vorgesehen sind.

2. Antrieb nach Anspruch 1,
**dadurch gekennzeichnet, dass**
der erste und/oder zweite Adapterflansch Zentriermittel umfasst, die mit entsprechenden Zentriermitteln am Elektroniotorgehäuse und/oder am Getriebegehäuse (21) die jeweilige Verbindung zentrieren,.

3. Antrieb nach Anspruch 2,
**dadurch gekennzeichnet, dass**
an den Zentriermitteln im Verbindungsbereich Wärmeleipaste angeordnet ist, so dass die Zentriermittel als Wärmeabfuhrmittel vom Motor zum Adapter hin fungieren beziehungsweise als Wärmeabfuhrmittel vom Getriebe zum Adapter hin fungieren,

4. Antrieb nach Anspruch 2 oder 3,
**dadurch gekennzeichnet, dass**
die Verbindung zwischen Adapter und Getriebe selbstzentrierend ausgeführt ist.

5. Antrieb nach mindestens einem der vorangegangenen Ansprüche,
**dadurch gekennzeichnet, dass**
die Kühlvorrichtung zur Ableitung der vom eintriebsseitigen Lager des Getriebes und von einem gegebenenfalls zugeordneten Wellendichtririg erzeugten Wärme in das den Antrieb umgebende Medium vorgesehen ist.

6. Antrieb nach mindestens einem der vorangegangenen Ansprüche,
**dadurch gekennzeichnet, dass**
der Adapter als Kühlvorrichtung eine oberflächenvergrößernde Struktur aufweist oder umfasst.

7. Antrieb nach mindestens einem der vorangegangenen Ansprüche,
**dadurch gekennzeichnet, dass**
der erste und/oder zweite Adapterflansch Zentriermittel umfasst, die mit entsprechenden Zentriermitteln am Elektromotorgehäuse und/oder am Getriebegehäuse (21) zur Zentrierung der jeweiligen Verbindung vorgesehen sind und zur Wärmeableitung zur Kühlvorrichtung des Adapters hin vorgesehen sind.

8. Antrieb nach mindestens einem der vorangegangenen Ansprüche,
**dadurch gekennzeichnet, dass**
die Kühlvorrichtung radial sich erstreckende Fächer oder Rippen umfasst.

9. Antrieb nach mindestens einem der vorangegangenen Ansprüche,
**dadurch gekennzeichnet, dass**
ein Lüfterrad mit einer Welle verbunden ist, wobei das Lüfterrad als Radiallüfterrad oder als Axiallüfterrad ausgebildet ist.

10. Antrieb nach mindestens einem der vorangegangenen Ansprüche,
**dadurch gekennzeichnet, dass**
die Fächer oder Rippen Luftleitflächen bilden zur Reduzierung von Turbulenz und/oder Drall für den Axiallüfter oder Radiallüfter.

11. Antrieb nach mindestens einem der vorangegangenen Ansprüche,
**dadurch gekennzeichnet, dass**
das Lüfterrad einen Grundkörper und Lüfterflügel aufweist, wobei am äußeren Umfang des Lüfterrads ein Verbindungsring und/oder ein Luftleitring vorgesehen ist.

12. Antrieb nach mindestens einem der vorangegangenen Ansprüche,
**dadurch gekennzeichnet, dass**
das Lüfterrad formschlüssig mit der Welle verbunden ist.

13. Antrieb nach mindestens einem der vorangegangenen Ansprüche,
**dadurch gekennzeichnet, dass**
die Welle eine eintreibende Welle (20) des Getriebes oder eine Adapterwelle ist.

14. Antrieb nach mindestens einem der vorangegangenen Ansprüche,
**dadurch gekennzeichnet, dass**
der Lüfter gekapselt vorgesehen ist, wobei ein Luftumlunkblech zum Umlenken der Luft in axiale Richtung ausgebildet ist.

## Claims

1. A drive, including a gear which is driven by an electric motor and has an adapter arranged between the motor and the gear,
wherein a housing of the adapter is connected on a first side to the housing of the electric motor and on another side to the housing (21) of the gear, wherein a cooling device is constructed on the adapter housing, and the adapter is constructed in one piece with the cooling device,
wherein the adapter
- includes a first adapter flange which is connected to the gear housing (21),
- includes a second adapter flange which is connected to the electric motor housing,
wherein the first adapter flange is a basic ring (2) and the second adapter flange is an adapter outer ring (41),
**characterised in that**
cooling fins (1) and stiffeners (42) are provided between the basic ring (2) and the adapter outer ring (41).

2. A drive according to Claim 1, **characterised in that** the first and/or second adapter flange includes centring means which centre the respective connection using corresponding centring means on the electric motor housing and/or on the gear housing (21).

3. A drive according to Claim 2, **characterised in that** thermally conductive paste is arranged on the centring means in the connection region such that the centring means function as heat dissipation means from the motor to the adapter and/or function as heat dissipation means from the gear to the adapter.

4. A drive according to Claim 2 or 3, **characterised in that** the connection between the adapter and the gear is constructed to be self-centring.

5. A drive according to at least one of the preceding claims, **characterised in that** the cooling device is provided for guiding away heat that is generated by the input-side bearing of the gear, and by an associated shaft sealing ring if applicable, into the medium surrounding the drive.

6. A drive according to at least one of the preceding claims, **characterised in that** the adapter, as a cooling device, has or includes a structure that increases the surface area.

7. A drive according to at least one of the preceding claims, **characterised in that** the first and/or second adapter flange includes centring means which are provided with corresponding centring means on the electric motor housing and/or on the gear housing (21) for centring the respective connection, and are provided for guiding away heat towards the cooling device of the adapter.

8. A drive according to at least one of the preceding claims, **characterised in that** the cooling device includes radially extending ribs or fins.

9. A drive according to at least one of the preceding claims, **characterised in that** a fan wheel is connected to a shaft, wherein the fan wheel is constructed as a radial fan wheel or as an axial fan wheel.

10. A drive according to at least one of the preceding claims, **characterised in that** the ribs or fins form air baffles for reducing turbulence and/or twist for the axial fan or radial fan.

11. A drive according to at least one of the preceding claims, **characterised in that** the fan wheel has a base body and fan blades, wherein a connecting ring and/or an air guiding ring is provided on the outer periphery of the fan wheel.

12. A drive according to at least one of the preceding claims, **characterised in that** the fan wheel is form-fittingly connected to the shaft.

13. A drive according to at least one of the preceding claims, **characterised in that** the shaft is an input shaft (20) of the gear or an adapter shaft.

14. A drive according to at least one of the preceding claims, **characterised in that** the fan is provided in an encapsulated arrangement, wherein an air deflector baffle is constructed for deflecting the air into the axial direction.

## Revendications

1. Entraînement comportant une transmission entraînée par un moteur électrique, et munie d'un adaptateur interposé entre ledit moteur et ladite transmission, un carter dudit adaptateur étant relié au carter dudit moteur électrique, sur un premier côté, et au carter (21) de ladite transmission sur un autre côté,
un dispositif de refroidissement étant ménagé sur ledit carter de l'adaptateur, et ledit adaptateur étant réalisé d'un seul tenant avec ledit dispositif de refroidissement,
sachant que l'adaptateur
- comprend une première bride d'adaptation reliée au carter (21) de la transmission,
- comprend une seconde bride d'adaptation reliée au carter du moteur électrique, ladite première bride d'adaptation étant un anneau d'embase (2), et ladite seconde bride d'adaptation étant une bague extérieure d'adaptation (41),
**caractérisé par le fait que**
des ailettes de refroidissement (1) et des rigidifications (42) sont prévues entre l'anneau d'embase (2) et la bague extérieure d'adaptation (41).

2. Entraînement selon la revendication 1,
**caractérisé par le fait que**
la première et/ou la seconde bride(s) d'adaptation comporte(nt) des moyens de centrage qui centrent la liaison considérée, en association avec des moyens de centrage correspondants sur le carter du moteur électrique et/ou sur le carter (21) de la transmission.

3. Entraînement selon la revendication 2,
**caractérisé par le fait que**
de la pâte thermiquement conductrice est déposée sur les moyens de centrage, dans la zone de liaison, de telle sorte que lesdits moyens de centrage remplissent respectivement la fonction de moyens de dissipation de chaleur, du moteur à l'adaptateur, ou de moyens de dissipation de chaleur, de la transmission audit adaptateur.

4. Entraînement selon la revendication 2 ou 3,
**caractérisé par le fait que**
la liaison, entre l'adaptateur et la transmission, est réalisée avec effet d'autocentrage.

5. Entraînement selon au moins l'une des revendications précédentes,
**caractérisé par le fait que**
le dispositif de refroidissement est prévu pour céder, au fluide entourant ledit entraînement, la chaleur engendrée par le palier situé côté entrée de la transmission, et par une bague d'étanchement d'arbre éventuellement associée.

6. Entraînement selon au moins l'une des revendications précédentes,
**caractérisé par le fait que**
l'adaptateur présente, ou comprend, une structure augmentant la surface et agissant en tant que dispositif de refroidissement.

7. Entraînement selon au moins l'une des revendications précédentes,
**caractérisé par le fait que**
la première et/ou la seconde bride(s) d'adaptation comporte(nt) des moyens de centrage prévus pour le centrage de la liaison considérée, en association avec des moyens de centrage correspondants sur le carter du moteur électrique et/ou sur le carter (21) de la transmission, et prévus pour la dissipation de chaleur vers le dispositif de refroidissement de l'adaptateur.

8. Entraînement selon au moins l'une des revendications précédentes,
**caractérisé par le fait que**
le dispositif de refroidissement présente des cloisonnements ou des ailettes s'étendant dans le sens radial.

9. Entraînement selon au moins l'une des revendications précédentes,
**caractérisé par le fait**
**qu'**une roue de ventilateur est reliée à un arbre, ladite roue de ventilateur étant réalisée sous la forme d'une roue de ventilateur radial, ou d'une roue de ventilateur axial.

10. Entraînement selon au moins l'une des revendications précédentes,
**caractérisé par le fait que**
les cloisonnements ou les ailettes forment des surfaces de guidage d'air, conçues pour réduire une turbulence et/ou un écoulement tourbillonnaire affectant le ventilateur axial ou le ventilateur radial.

11. Entraînement selon au moins l'une des revendications précédentes,
**caractérisé par le fait que**
la roue de ventilateur présente un corps de base et des aubettes de ventilation, une bague de liaison, et/ou une bague de guidage d'air, étant prévue(s) sur le pourtour extérieur de ladite roue de ventilateur.

12. Entraînement selon au moins l'une des revendications précédentes,
**caractérisé par le fait que**
la roue de ventilateur est reliée à l'arbre par complémentarité de formes.

13. Entraînement selon au moins l'une des revendications précédentes,
**caractérisé par le fait que**
l'arbre est un arbre d'entrée (20) de la transmission, ou un arbre d'adaptateur.

14. Entraînement selon au moins l'une des revendications précédentes,
**caractérisé par le fait que**
le ventilateur est prévu à l'état encapsulé, une tôle déflectrice d'air étant réalisée en vue de dévier l'air dans une direction axiale.
